**Europäisches Patentamt**

**European Patent Office**

**Office européen des brevets**

(19)

(11) Veröffentlichungsnummer: **0 029 132**
**B1**

(12) # EUROPÄISCHE PATENTSCHRIFT

(45) Veröffentlichungstag der Patentschrift:
**23.02.83**

(51) Int. Cl.³: **C 01 B 25/237**

(21) Anmeldenummer: **80106516.0**

(22) Anmeldetag: **24.10.80**

(54) **Verfahren zur Reinigung von Nassverfahrensphosphorsäure.**

(30) Priorität: **14.11.79 DE 2945874**

(43) Veröffentlichungstag der Anmeldung:
**27.05.81 Patentblatt 81/21**

(45) Bekanntmachung des Hinweises auf die Patenterteilung:
**23.02.83 Patentblatt 83/8**

(84) Benannte Vertragsstaaten:
**AT BE CH DE FR GB IT LI NL SE**

(56) Entgegenhaltungen:
**DE-A-2 127 141**
**DE-A-2 429 758**
**DE-A-2 657 189**
**DE-A-3 002 339**
**DE-B-2 032 263**
**DE-B-2 321 751**
**DE-B-2 704 545**
**US-A-3 338 674**

(73) Patentinhaber: **HOECHST AKTIENGESELLSCHAFT,
Postfach 80 03 20, D-6230 Frankfurt/Main 80 (DE)**

(72) Erfinder: **Gradl, Reinhard, Dr., Am Grünen Weg 6,
D-5030 Hürth (DE)**
Erfinder: **Schrödter, Klaus, Dr., Röntgenstrasse 23,
D-5000 Köln 30 (DE)**
Erfinder: **Ehlers, Klaus-Peter, Dr., Am Steinfeld 5,
D-5042 Erftstadt (DE)**

Verfahren zur Reinigung von Nassverfahrensphosphorsäure

Die vorliegende Erfindung betrifft ein Verfahren zur Reinigung von Nassverfahrensphosphorsäure durch eine mehrstufige Gegenstromextraktion in Gegenwart von Schwefelsäure mit organischen Lösungsmitteln, die mit Wasser nicht oder nur begrenzt mischbar sind und wobei die Sulfationen durch Zugabe von Bariumverbindungen entfernt werden, die mit diesen Ionen schwerlösliche Niederschläge bilden. Die Rückgewinnung der gereinigten Phosphorsäure erfolgt dann in bekannter Weise aus dem organischen Phosphorsäureextrakt, nachdem dieser von dem vor der organischen Phase nicht aufgenommenen Rückstand abgetrennt worden ist.

Es ist bekannt, zur extraktiven Reinigung von Nassverfahrensphosphorsäure als Lösungsmittel sowohl solche organischen Solventien zu verwenden, die mit Wasser unbegrenzt mischbar sind, als auch solche, die mit Wasser nicht oder nur teilweise mischbar sind. Häufig werden Alkohole mit 4 bis 8 C-Atomen verwendet, wie z.B. Isobutanol oder Amylalkohol. Diese Lösungsmittel werden in wassergesättigter Form (US-A Nr. 3338674), teilweise wassergesättigt (DE-A Nr. 2127141, DE-A Nr. 2657189), oder in wasserfreier Form (DE-B Nr. 2321751) eingesetzt. Häufig kommt es allerdings bei diesen Verfahren zu Verkrustungen in den Extraktionsapparaten, die zu erheblichen Störungen in der betrieblichen Praxis führen.

Werden an die Reinheit der Phosphorsäure hohe Anforderungen gestellt, z.B. bei der Nahrungs- oder Arzneimittelherstellung, so ist, neben der Entfernung anderer Verunreinigungen aus der Säure, auch die mehr oder weniger weitgehende Entfernung der Sulfationen erforderlich.

Deshalb hat man schon versucht, Phosphorsäure zur Entfernung von Sulfat mit Bariumsalzen zu behandeln. Allerdings hat sich dabei gezeigt, dass die Bariumsulfatfällung in der Praxis erhebliche Schwierigkeiten bereitet, da der Niederschlag aus konzentrierten Lösungen in besonders feinverteilter Form ausfällt. Deshalb muss die Phosphorsäure vor der Fällung erst verdünnt und nach der Entsulfatisierung wieder eingedampft werden, was mit einem beträchtlichen apparativen und finanziellen Aufwand verbunden ist (DE-B Nr. 2032263 und DE-R Nr. 2429758).

Nach der DE-B Nr. 2704545 wird einer durch Extraktion mit einem organischen Lösungsmittel gereinigten Phosphorsäure eine Bariumverbindung zugegeben und das ausgefällte Bariumsulfat von der Phosphorsäure abgetrennt. Dabei gibt man die Bariumverbindung zu einer über 70 gew.%igen Phosphorsäure in einer solchen Menge, dass wenigstens 5 Gew.% ppm an gelöstem Sulfat in der Phosphorsäure zurückbleiben, und trennt das ausgefällte Bariumsulfat bei einer Temperatur von unter 80°C ab.

Dieses Verfahren hat jedoch folgende erhebliche Nachteile: Das entstehende Bariumsulfat muss in relativ konzentrierter Säure abfiltriert werden, was bekanntermassen technisch schwierig ist. Die Bariumverbindung darf nur im stöchiometrischen Unterschuss zur Sulfatkonzentration zugegeben werden, wodurch eine ständige Sulfatkonzentrationsmessung erforderlich ist, die aufwendig und bei den sehr geringen Konzentrationen mit erheblichen Fehlern verbunden ist. Bei hohen Sulfatausgangswerten muss die Bariumzugabe einige Male wiederholt werden und die verbleibende Sulfatkonzentration jedesmal gemessen werden, so dass eine kontinuierliche Verfahrensführung sehr erschwert wird.

Ferner werden gemäss der DE-A Nr. 2429758 aus Nassphosphorsäure in einem 2-Stufenverfahren Sulfationen ausgefällt. Die zunächst noch 6-8 Gew.% Sulfat enthaltende Nassphosphorsäure wird durch Zugabe von Calciumverbindungen auf einen Gehalt von 0,23 Gew.% Sulfat verringert, danach werden das Silicium und Fluor vollständig abgetrennt. Die Phosphorsäure wird in einem Folgeschritt mit organischen Lösungsmitteln extrahiert. Die im Extrakt enthaltenen Sulfationen werden mit Bariumsalzen als Bariumsulfat ausgefällt. Dazu muss das Gemisch aus Extrakt und der Bariumverbindung während mehr als 30 min bis 2 h gerührt werden. Die den Bariumsulfatniederschlag enthaltende Aufschlämmung wird dann direkt einer Waschstufe zugeführt.

Von erheblichem Nachteil bei diesem Verfahren ist einmal die notwendige extrem lange Reaktionszeit von bis zu 2 h und zum anderen die Tatsache, dass der in dem organischen Extrakt suspendierte Bariumsulfatniederschlag nur zu einem geringen Teil bei der Waschung in die wässerige Phase übergeführt werden kann und damit zum überwiegenden Teil auch während der Waschung in der organischen Phase verbleibt. Um die Gefahr zu vermeiden, dass der Bariumsulfatniederschlag in die Stufe der Rückextraktion gelangt und damit die gereinigte Säure durch Bariumsulfat verunreinigt wird, muss der Niederschlag abgetrennt werden, was zu den bekannten Schwierigkeiten führt.

Es war demnach bisher nicht möglich, bereits während der Extraktion von Nassverfahrensphosphorsäure mit einem organischen Lösungsmittel gleichzeitig, und zwar auf einfache Art und Weise (d.h. ohne zusätzlichen Verfahrensschritt, insbesondere ohne Filtration), auch die Sulfationen zu reduzieren bzw. zu entfernen.

Aufgabe der Erfindung ist es deshalb, die Reinigung von Nassverfahrensphosphorsäure unter solchen Bedingungen durchzuführen, dass

a) bereits während der Extraktion auch eine wirksame Abtrennung der Sulfationen erfolgt;

b) die Abtrennung der Sulfationen keinen zusätzlichen Verfahrensschritt, insbesondere keine Filtration, erfordert;

c) gleichzeitig ein Höchstmass an $P_2O_5$ gewonnen wird, und dass

d) während der Extraktion keine Verkrustung durch auskristallisierende Verbindungen auftritt.

Überraschenderweise wurde gefunden, dass sich diese Aufgabe lösen lässt, wenn man die Reinigung von Nassverfahrensphosphorsäure durch mehrstufige Gegenstromextraktion in Gegenwart von Schwefelsäure mit Hilfe organischer Lösungsmittel, die mit Wasser nicht oder nur begrenzt mischbar sind, unter bestimmten Bedingungen durchführt, wobei die Sulfationen durch Zugabe von Bariumverbindungen entfernt werden, welche mit diesen Ionen schwerlösliche Niederschläge bilden, und man die Phosphorsäure aus dem abgetrennten organischen Extrakt rückgewinnt.

Zu diesen Bedingungen gehört, dass man

a) die Reinigung in einer n-stufigen Extraktionsanlage vornimmt, in der n gleich oder grösser als 5, vorzugsweise 5-10, ist;

b) die Bariumverbindung der zu reinigenden Phosphorsäure zusetzt und die erhaltene Mischung am Kopf der Extraktionsanlage zuführt;

c) die organische Lösungsmittelphase in der wässerigen Phase dispergiert, und

d) die Schwefelsäure im Gegenstrom zur Phosphorsäure führt, indem sie in einer der Stufen von Stufe 4 bis Stufe n−1 zugegeben wird.

Vorzugsweise werden erfindungsgemäss als organische Lösungsmittel Alkohole mit 5 Kohlenstoffatomen — wasserfrei, teilweise oder völlig wassergesättigt — und Nassverfahrensphosphorsäurelösungen mit $P_2O_5$-Gehalten von 40-55 Gew.% eingesetzt. Die Schwefelsäure wird vorzugsweise in konzentrierter Form und in einer Menge von 2-20 Gew.%, bezogen auf die Phosphorsäure, berechnet als $P_2O_5$, zugesetzt. Die notwendige Lösungsmittelmenge ist abhängig vom Wassergehalt des Lösungsmittels und der $P_2O_5$-Konzentration der verunreinigten Nassverfahrensphosphorsäure. Die Lösungsmittel werden mit abnehmender $P_2O_5$-Konzentration der Säure und zunehmendem Wassergehalt des Lösungsmittels in grösseren Mengen zugesetzt. So werden beispielsweise bei Verwendung von wasserfreien $C_5$-Akoholen als Lösungsmittel und bei $P_2O_5$-Gehalten der Säuren von jeweils 40-55 Gew.% die Alkohole entsprechend in Volumenteilen von 5,5-2,5/1 Volumenteil Säure, bei Verwendung von wassergesättigten Alkoholen und 40-55%iger Säure 6,0-8,2 Volumenteile Alkohol eingesetzt. Die Extraktion kann bei Temperaturen zwischen 0 und 98°C, vorzugsweise zwischen 20 und 50°C, durchgeführt werden. Als Bariumverbindungen eignen sich nach dem erfindungsgemässen Verfahren Bariumkarbonat, -hydroxid, -phosphat, -chlorid, -nitrat und dergleichen.

Bevorzugt werden jedoch Bariumkarbonat, -hydroxid und -phosphat eingesetzt, um Verunreinigungen durch die Anionen zu verhindern.

Die Bariumverbindung kann in fester Form oder in wässeriger oder in Phosphorsäurelösung eingesetzt werden. Sie wird der zu extrahierenden Rohphosphorsäure vor der eigentlichen Extraktion zugemischt. Zweckmässigerweise wird die Bariumverbindung der wässerigen Phosphorsäurelösung zugesetzt, die erhalten wird, wenn die organische Phosphorsäurelösung in bekannter Weise zur Entfernung der kationischen Verunreinigungen mit Wasser gewaschen wird. Dieses sogenannte Waschraffinat kann zusammen mit der Bariumverbindung entweder direkt in die 1. Stufe der Extraktionsbatterie eingespeist oder mit der zu extrahierenden Phosphorsäure zuvor gemischt werden. Die Menge der zugesetzten Bariumverbindung richtet sich nach dem Gehalt an Sulfationen in der zu extrahierenden Phosphorsäure, nach der Menge der als Extraktionshilfsmittel zugesetzten Schwefelsäure, bzw. nach der gewünschten Sulfatkonzentration in der gereinigten Phosphorsäure.

Vorteilhafterweise wird, bevor die Bariumzugabe erfolgt, die Sulfationenkonzentration in der 1. Stufe der Extraktionsapparatur in der wässerigen und in der organischen Phase ermittelt und bezogen auf diesen Wert die Bariumverbindung im stöchiometirischen oder unterstöchiometrischen — je nach gewünschter Sulfationenkonzentration — Verhältnis zugegeben.

Damit lässt sich in der konzentrierten und gereinigten Säure nahezu jede gewünschte Sulfationenkonzentration bis herab zu etwa 10 ppm einstellen.

Die Extraktion wird erfindungsgemäss in der Weise durchgeführt, dass man die organische Lösungsmittelphase in der wässerigen Phase dispergiert.

Diese Art der Dispergierung ist erforderlich, um zu gewährleisten, dass der Bariumsulfatniederschlag in der wässerigen Phase dispergiert bleibt. Andernfalls gelangen erhebliche Anteile an Bariumsulfatkristallen in die organische Phase, so dass als zusätzliche Massnahme beispielsweise eine mechanische Abtrennung erforderlich würde, wobei die bekannten Schwierigkeiten auftreten.

Durch die erfindungsgemässe Art der Dispergierung ergeben sich ausserdem folgende Vorteile:

a) Der Sulfatgehalt sowie die Bariumkonzentration in der Extraktphase, und damit in der gereinigten Säure, sind erheblich geringer als bei Dispergierung in üblicher Weise, d.h. umgekehrt: Dispergierung der wässerigen Phase in der organischen Phase als kontinuierliche Phase.

b) Die $P_2O_5$-Ausbeute liegt bei der erfindungsgemässen Dispergierung höher als bei der üblichen Verfahrensweise.

Die erfindungsgemässe Dispergierung erfolgt, indem man in der mehrstufigen Extraktionsanlage, deren einzelne Stufen jeweils Misch- und Trennzonen umfassen, zu Beginn der Extraktion die Mischzonen mit wässeriger Phase füllt, während der Extraktion die organische und die wässerige Phase in einem Volumenverhältnis von mindestens 2,5:1, vorzugsweise von 4:1 bis 8:1, und in einer solchen Gesamtmenge den Extraktionszonen kontinuierlich zuführt, dass sich in deren Mischzonen ein Volumenverhältnis von organischer zu wässeriger Phase von höchstens 1:1, vorzugsweise 4:6 bis 2:8, einstellt und dieses Verhältnis aufrechterhalten wird.

Grundlage des vorliegenden Extraktionsverfahrens ist, dass der zu extrahierenden Rohphosphorsäure eine Bariumverbindung zur Ausfällung der Sulfationen vor der Extraktion zugegeben und der gebildete Bariumsulfatniederschlag nicht abgetrennt wird, sondern während des Extraktionsschrittes in der wässerigen Phase suspendiert bleibt und mit dem die übrigen Verunreinigungen enthaltenden wässerigen Extraktionsrückstand, dem Raffinat, abgetrennt wird.

Obwohl in der Fachwelt eine Fällung der Sulfationen durch Bariumverbindungen aus konzentrierteren Rohsäuren für sehr schwierig gehalten wird, ist dies nach dem erfindungsgemässen Verfahren auf einfache Weise möglich, wobei sich zusätzlich folgende Vorteile ergeben:

a) der Sulfatgehalt der gereinigten Säure ist durch die zugesetzte Bariummenge regulierbar, je nach Anwendungszweck;

b) kein zusätzlicher Verfahrensschritt zur Abtrennung des Bariumsulfatniederschlages erforderlich;

c) sehr hohe $P_2O_5$-Ausbeute;

d) extrem niedrige Bariumverunreinigung der gereinigten Säure;

e) keine Verkrustungen an der Apparatur.

Durch den Bariumsulfatniederschlag sind in der Suspension genügend Feststoffkeime vorhanden. Eventuell neben dem Bariumsulfat anfallender Feststoff bleibt in der wässerigen Phase suspendiert und kann mit dem Raffinat ausgeschleust werden.

Anhand der nachfolgenden Beispiele soll das Verfahren näher erläutert werden, ohne dass dadurch der Erfindungsgegenstand auf diese Beispiele beschränkt sein soll.

*Beispiele 1-6*

Eine handelsübliche Rohphosphorsäure aus Marokkophosphat enthielt 47,5 Gew.% $P_2O_5$ und folgende Hauptverunreinigungen, bezogen auf $P_2O_5$: Eisen 5700 ppm, Sulfat 0,61%.

In einer Versuchsreihe wurde je ein l/h dieser Säure zusammen mit 250 ml/h rezirkulierter Waschlösung in einer 8stufigen Gegenstromapparatur mit 6 l reinem, wassergesättigtem n-Amylalkohol extrahiert, wobei die wässerige Phase in der Mischzone vorgelegt und darin die organische Phase dispergiert wurde.

In den Mixer der 7. Stufe wurden 66 ml/h konzentrierte Schwefelsäure eindosiert.

Vor der Extraktion wurde die Rohphosphorsäure mit unterschiedlichen Mengen einer Bariumverbindung versetzt.

Die je nach Menge der zugesetzten Bariumverbindung sich ergebenden Sulfatkonzentration in der gereinigten und auf 60 Gew.% $P_2O_5$ eingedampften Phosphorsäure sowie die in jedem Versuch erzielten $P_2O_5$-Ausbeute sind aus folgender Tabelle ersichtlich:

Tabelle 1

| Beispiel Nr. | 1* | 2 | 3 | 4 | 5 | 6 |
|---|---|---|---|---|---|---|
| Bariumkarbonatzugabe [%/$P_2O_5$]-Einsatz | 0 | 0,7 | 1,4 | 1,9 | 2,8 | 3,85 |
| Sulfatgehalt in Reinsäure [ppm] | 3100 | 1500 | 500 | 280 | 32 | 9 |
| $P_2O_5$-Ausbeute [%] | 97,4 | 97,2 | 96,9 | 97,0 | 96,5 | 96,0 |

* Vergleichsbeispiel

*Beispiele 7-9*

Wie in Beispielen 1-6 wurde Rohphosphorsäure aus Marokkophosphat, jedoch mit einem Sulfatgehalt von 1,2 Gew.%, bezogen auf $P_2O_5$ mit wasserhaltigem Amylalkohol, extrahiert, wobei 18,3 Gew.% Schwefelsäure, bezogen auf eingesetztes Roh-$P_2O_5$, im Gegenstrom eingesetzt wurden.

Werden unter sonst völlig gleichen Versuchsbedingungen zwei Versuche durchgeführt mit dem Unterschied, dass einmal die wässerige Phase kontinuierlich eingesetzt und die organische Phase dispergiert wird (s. in Tabelle 2, Beispiel 7: Dispergierart w.k.-o.d.) und im anderen Fall (Beispiel 8) umgekehrt verfahren wird (w.d.-o.k., d.h. wässerige Phase dispergiert organische Phase kontinuierlich), ergeben sich die nachfolgend aufgeführten Werte. Die unter Beispiel 9 aufgeführten Werte ergeben sich bei erfindungsgemässer Dispergierung, jedoch ohne Bariumkarbonatzugabe (Vergleichsbeispiel).

Tabelle 2

| Beispiel Nr. | 7 | 8 | 9 |
|---|---|---|---|
| Bariumkarbonatzugabe [%/$P_2O_5$]-Einsatz | 2,76 | 2,76 | 0 |
| Dispergierart | w.d.-o.k. | w.k.-o.d. | w.k.-o.d. |
| Sulfatgehalt in Reinsäure [ppm] | 0,10 | 0,22 | 0,51 |

Tabelle 2 (Fortsetzung)

| Beispiel Nr. | 7 | 8 | 9 |
|---|---|---|---|
| Bariumgehalt in Reinsäure [ppm] | <1 | 10 | — |
| $P_2O_5$-Ausbeute [%] | 97,2 | 96,1 | 97,3 |

## Patentansprüche

1. Verfahren zur Reinigung von Nassverfahrensphosphorsäure durch mehrstufige Gegenstromextraktion in Gegenwart von Schwefelsäure mit Hilfe organischer Lösungsmittel, die mit Wasser nicht oder nur begrenzt mischbar sind, wobei die Sulfationen durch Zugabe von Bariumverbindungen entfernt werden, welche mit diesen Ionen schwerlösliche Niederschläge bilden, und Rückgewinnung der Phosphorsäure aus dem abgetrennten organischen Extrakt, dadurch gekennzeichnet, dass man

a) die Reinigung in einer n-stufigen Extraktionsanlage vornimmt, in der n gleich oder grösser als 5 ist;

b) die Bariumverbindung der zu reinigenden Phosphorsäure zusetzt und die erhaltene Mischung am Kopf der Extraktionsanlage zuführt;

c) die organische Lösungsmittelphase in der wässerigen Phase dispergiert, und

d) die Schwefelsäure im Gegenstrom zur Phosphorsäure führt, indem sie in einer der Stufen von Stufe 4 bis Stufe n−1 zugegeben wird.

2. Verfahren nach Anspruch 1, dadurch gekennzeichnet, dass man die Reinigung in einer Extraktionsanlage vornimmt, deren Stufenzahl n=5 bis 10 beträgt.

3. Verfahren nach einem der beiden Ansprüche 1 oder 2, dadurch gekennzeichnet, dass die Schwefelsäure in einer Menge von 2 bis 20 Gew.% zugegeben wird, bezogen auf die Phosphorsäure, berechnet als $P_2O_5$.

## Revendications

1. Procédé de purification de l'acide phosphorique préparé par voie humide par extraction à contre-courant en plusieurs stades en présence d'acide sulfurique, par des solvants organiques non miscibles ou partiellement miscibles à l'eau, les ions sulfate étant éliminés par addition de composés de baryum formant des précipités peu solubles avec ces ions, et récupération de l'acide phosphorique à partir de l'extrait organique séparé, caractérisé en ce que:

a) on effectue la purification dans une installation d'extraction comportant n stades, n étant égal ou supérieur à 5;

b) on ajoute le composé de baryum à l'acide phosphorique à purifier et on introduit le mélange obtenu en tête de l'installation d'extraction;

c) on disperse la phase de solvant organique dans la phase aqueuse, et

d) on envoie l'acide sulfurique à contre-courant de l'acide phosphorique en l'introduisant dans l'un des stades allant du stade 4 au stade n−1.

2. Procédé selon la revendication 1, caractérisé en ce que l'on effectue la purification dans une installation d'extraction dont le nombre de stades n est de 5 à 10.

3. Procédé selon l'une des revendications 1 ou 2, caractérisé en ce que l'on ajoute l'acide sulfurique en quantité de 2 à 20% en poids, par rapport à l'acide phosphorique, calculé en $P_2O_5$.

## Claims

1. Process for purifying wet-processed phosphoric acid by multi-stage countercurrent extraction, in the persence of sulfuric acid, with the aid of organic solvents which are immiscible or only partially miscible with water, the sulfate ions being removed by addition of barium compounds forming sparingly soluble precipitates with these ions, and recovery of the phosphoric acid from the separated organic extract, characterized in that:

(a) the purification is carried out in an extraction installation comprising n stages, where n is equal to or greater than 5;

(b) the barium compound is added to the phosphoric acid to be purified and the resulting mixture is introduced into the head portion of the extraction installation;

(c) the organic solvent phase is dispersed in the aqueous phase, and

(d) the sulfuric acid is caused to travel countercurrently to the phosphoric acid by introducing it into one of the stages reaching from stage 4 to stage n−1.

2. Process as claimed in claim 1, wherein the purification is carried out in an extraction installation in which the number of stages n is 5 to 10.

3. Process as claimed in claim 1 or 2, wherein the sulfuric acid is added in a proportion of 2 to 20% by weight, based on phosphoric acid, calculated as $P_2O_5$.